# EUROPÄISCHE PATENTSCHRIFT

(11) **EP 0 933 551 B1**
(45) Veröffentlichungstag und Bekanntmachung des Hinweises auf die Patenterteilung: **07.11.2001**
(21) Anmeldenummer: 98810834.6
(22) Anmeldetag: 24.08.1998
(51) Int. Cl.: F16D 65/12

(54) **Bremsscheibe**
Disk brake
Frein à disque

(30) Priorität: 02.02.1998 EP 98810073
(43) Veröffentlichungstag der Anmeldung: 04.08.1999
(73) Patentinhaber: ALUMINIUM RHEINFELDEN GmbH, 79618 Rheinfelden (DE)
(72) Erfinder: Botsch, Siegfried, 35282 Rauschenberg (DE); Koch, Hubert, 79618 Rheinfelden (DE)
(74) Vertreter: Patentanwälte Breiter + Wiedmer AG

(56) Entgegenhaltungen:
- EP-A- 0 318 687
- DE-A- 4 436 653
- US-A- 4 819 769
- US-A- 5 109 960
- US-A- 5 161 652

## Beschreibung

Die Erfindung betrifft eine Bremsscheibe mit einem Hut aus einer Aluminium-Gusslegierung und einem Bremsring aus Stahlguss oder Gusseisen, wobei der Hut unter Ausbildung eines radialen Abstandes zwischen Hut und Bremsring an am inneren Umfang des Bremsringes radial einwärts ragende Verankerungsteile angegossen ist.

Bremsscheiben aus Gusseisen in belüfteter oder massiver Form sind allgemein bekannt. Die Narbenanbindung erfolgt über den Hut, der üblicherweise mit der Bremsscheibe in einem Stück gegossen oder aber eine aufgepresste Blechkonstruktion ist. Je nach Ausführung liegt das Gewicht einer Bremsscheibe zwischen etwa 6 und 15 kg für Personenwagen und bis ca. 40 bis 50 kg für Lastkraftwagen.

Aus ATZ Automobiltechnische Zeitschrift 96 (1994) 9 ist ein Konzept bekannt, bei dem der Bremsring aus Grauguss und der Hut aus einer Aluminium-Legierung besteht. Die Anbindung erfolgt dort über Bolzen aus rostfreiem Stahl. Die Gewichtsersparnis einer derartigen Anordnung gegenüber üblichen Einstoffbremsscheiben beträgt etwa 10%. Dieses Konzept ist jedoch sehr teuer und wird daher nur in Kleinserien hochwertiger Fahrzeuge eingesetzt.

Eine Bremsscheibe der eingangs genannten Art ist in GB-A-2107012 offenbart. Dort besteht der Hut aus einer Aluminiumlegierung, die auf den Bremsring aufgegossen ist. Ein wesentlicher Nachteil dieses Lösungsansatzes ist die sehr steife Anbindung des Hutes an den Bremsring, der in der Folge zur Schirmung neigt, was u.a. ein sogenanntes Rubbeln der Bremsen verursacht.

Eine Bremsscheibe der eingangs genannten Art ist auch aus der DE-A-44 36 653 bekannt. Die vom inneren Umfang der Bremsscheibe radial einwärts ragenden Verankerungsteile sind dort als Stege bzw. als von Stegenbegrenzte Aussparungen ausgebildet.

Die Bremsscheibe stellt eine ungefederte Masse im Fahrzeug dar, d.h. eine Gewichtsersparnis in diesem Bereich würde eine spürbar bessere Fahrkomfortsteigerung und eine weitere Gewichtsreduzierung nach sich ziehen. Durch den Einsatz temperaturleitender Werkstoffe wie Aluminium-Legierungen kann zudem die Lebensdauer der Bremsscheiben signifikant erhöht werden.

Der Erfindung liegt deshalb die Aufgabe zugrunde, eine Bremsscheibe der eingangs genannten Art zu schaffen, welche ein vermindertes Verzugs- und Schirmungsverhalten zeigt und eine verbesserte Wärmeableitung aufweist.

Zur erfindungsgemässen Lösung der Aufgabe führt, dass die Verankerungsteile als am Bremsring angeformte Taschen mit einem radial nach innen gerichteten, eine Taschenöffnung begrenzenden Taschenrand ausgebildet sind, wobei der Taschenrand vom Hut umgossen ist und die Taschen im wesentlichen mit der Aluminium-Gusslegierung gefüllt sind.

Die erfindungsgemäss taschenförmig ausgebildeten Verankerungsteile führen nach dem formschlüssigen Umgiessen mit dem Hut zu einer quasi schwimmenden Lagerung des Bremsringes. Durch diese besondere Anbindung kann sich der Bremsring bei dieser Zweistoffbremsscheibe bei einer Erhitzung durch Bremsen frei in radialer Richtung ausdehnen. Die Taschen dienen dabei als Führung und nehmen ebenso Kräfte in axialer Richtung auf Durch dieses "freie" Ausdehnen des Bremsringes schirmt der Bremsring nicht auf Es entstehen nur geringe Spannungen im Bereich der Anbindung zwischen Hut und Bremsring, die jedoch im elastischen Bereich des Werkstoffes liegen.

Der Wärmeübergang vom Bremsring auf den Hut erfolgt nur über die Innenflächen der mit der Aluminium-Gusslegierung gefüllten Taschen. Dieser Wärmeübergang ist so bemessen, dass die verwendete Aluminium-Gusslegierung ihre Festigkeitseigenschaften beibehält. Es hat sich gezeigt, dass bei HFT-Tests, d.h. bei Bremsversuchen mit besonders hoher thermischer Beanspruchung der Bremsscheibe, die Temperatur im Hut nicht über 270°C anstieg. Diese Temperatur liegt im Temperaturbereich einer normalen Einstoffbremsscheibe.

Die erfindungsgemässe Konstruktion führt gegenüber einer Einstoffbremsscheibe zu einer Gewichtsverminderung von etwa 10%. Die Reduzierung der ungefederten Massen bedeutet gleichzeitig eine Steigerung des Fahrkomforts und zieht weitere Gewichtsreduzierungen an der Fahrzeugaufhängung nach sich.

Bevorzugt liegt die Anzahl der am Bremsring angeformten Taschen zwischen etwa 3 und 14.

Zur Verbesserung der Anbindung des Bremsringes an den Hut kann am Taschenrand ein nach aussen abragender ringförmiger Steg angeformt sein. Weiter kann die Tasche im Bereich des Taschenrandes eine ringförmige Hinterschneidung aufweisen.

Da die Taschen beim Angiessen des Hutes geschlossen werden, kann sich ein Luftpolster aufbauen. Um ein vollständiges Füllen der Taschen mit der Aluminium-Gusslegierung beim Angiessen des Hutes an den Bremsring sicherzustellen und damit einen möglichst hohen Wärmeübergang vom Bremsring auf den Hut zu erzielen, kann im Bereich des Taschenbodens eine Belüftungsöffnung vorgesehen sein.

Um eine weiter verbesserte Kühlung zu erzielen, kann die Hutwand zwischen benachbarten Taschen Ausnehmungen für den direkten Luftzutritt zum Bremsring aufweisen. Diese Ausnehmung kann vom Rand der Hutwand ausgehen oder auch als Langloch ausgebildet sein. Mit dieser Massnahme wird neben einer besseren Kühlung des Bremsringes erreicht, dass sich auch der Hut weniger stark erhitzt.

Bei einer innenbelüfteten Bremsscheibe weist der Bremsring einen äusseren und einen inneren Reibring mit radial verlaufenden Verbindungsstegen auf Hierbei sind die Taschen zweckmässigerweise an Verbindungsstege angeformt. Die Ausnehmungen führen hier zu einem direkten Luftdurchtritt zwischen den Reibringen.

Die Ausnehmungen können grundsätzlich nach erfolgter Herstellung beispielsweise durch Ausfräsen erzeugt werden. Bevorzugt erfolgt die Ausbildung der Ausnehmungen jedoch durch Einformen beim Herstellungsprozess.

Bei einer bevorzugten Ausgestaltung der erfindungsgemässen Bremsscheibe besteht der Hut aus einer warmfesten, ggf faser- und/oder partikelverstärkten Aluminium-Gusslegierung, die auch sprühkompaktiert sein kann, und der Bremsring aus Stahlguss oder Gusseisen, insbesondere aus einer Eisengusslegierung mit hohem Kohlenstoffgehalt.

Zur Herstellung der Verbindung zwischen Hut und Bremsring ist der Hut auf den Bremsring aufgegossen, wobei als Giessverfahren Sandguss, Niederdruckguss, Kokillenguss, Pressguss, Druckguss, Squeezecasting oder Thixocasting bevorzugt sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen teilweisen Querschnitt durch eine Bremsscheibe;
- Fig. 2: eine Draufsicht auf die Bremsscheibe von Fig. 1 in Blickrichtung y;
- Fig. 3: eine Schrägsicht auf eine Tasche am Bremsring von Fig. 1;
- Fig. 4: einen Querschnitt durch eine zweite Ausführungsform einer Tasche;
- Fig. 5: einen Querschnitt durch eine dritte Ausführungsform einer Tasche mit Belüftungsöffnung;
- Fig. 6: eine Draufsicht auf einen Teil einer Bremsscheibe mit Luftdurchtrittsöffnung;
- Fig. 7: eine Teilansicht der Bremsscheibe von Fig. 6 in Blickrichtung z;
- Fig. 8: eine Teilansicht der Bremsscheibe von Fig. 6 mit Langloch in Blickrichtung z.

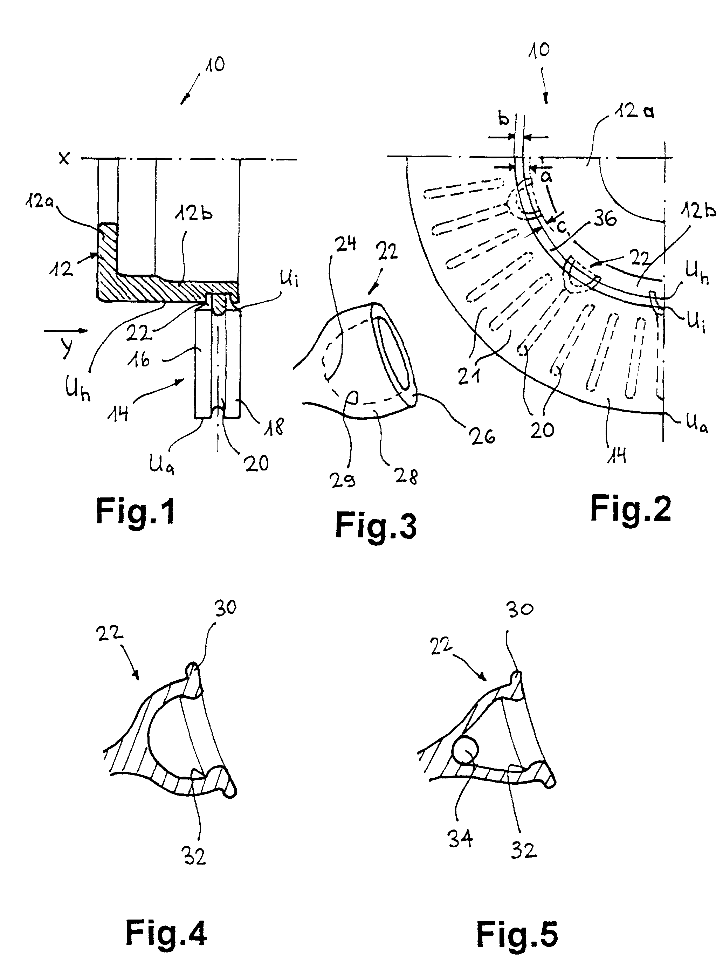

Eine in Fig. 1 und 2 dargestellte Bremsscheibe 10 weist einen Nabenteil oder Hut 12 und einen mit diesem verbundenden innenbelüfteten Bremsring 14 auf. Zur Montage der Bremsscheibe 10 wird der aus einem Bodenteil 12a und einem zylindrischen Teil 12b aufgebaute Hut 12 in Richtung der Scheibenachse x einer in der Zeichnung nicht dargestellten Radnabe eines Fahrzeuges aufgesetzt und an dieser festgeschraubt.

Der in der Zeichnung dargestellte Bremsring 14 ist innenbelüftet und setzt sich zusammen aus einem äusseren Reibring 16 und einem inneren Reibring 18, die über radial angeordnete, sich vom Bereich des äusseren Umfanges Uₐ zum Bereich des inneren Umfanges Uᵢ des Bremsringes erstreckende Stege 20 verbunden sind. Zwischen den Stegen 20 ergeben sich radiale Luftspalte 21. Jeder vierte Steg 20 endet in einer Tasche 22, die mit ihrem Taschenrand 26 den inneren Umfang Uᵢ um ein Mass a überragt. Im vorliegenden Beispiel sind am inneren Umfang Uᵢ des Bremsrings 14 zehn Taschen 22 angeordnet. Der Taschenrand 26 ist in radialer Draufsicht etwa oval ausgestaltet, wobei die längere Ovalachse in der Scheibenebene liegt.

Beim Umgiessen des Bremsringes 14 mit dem Hut 12 erfolgt die Anbindung über die sich von einem Taschenboden 24 zum Taschenrand 26 erstreckende Taschenwand 28, die um ein Mass c vom Hutumfang Uₕ in die Hutwand bzw. in den zylindrischen Teil 12b des Hutes 12 einragt, wobei auch die Tasche 22 beim Angiessen des Hutes 12 gefüllt wird.

Der innere Umfang Uᵢ des Bremsringes 14 ist vom Hutumfang Uₕ um ein Mass b unter Bildung eines nur im Bereich der Taschen 22 unterbrochenen Luftspaltes 36 beabstandet.

Die Fig. 4 und 5 zeigen weitere Ausbildungsformen einer Tasche 22. Am Taschenrand 26 ist ein ringförmiger Wulst oder Steg 30 nach aussen abragend angeformt. Zusätzlich ist an der Tascheninnenfläche 29 beim Übergang zwischen Taschenwand 28 und Taschenrand 26 eine ringförmige Hinterschneidung 32 angeordnet. In Fig. 5 ist zusätzlich im Bereich des Taschenbodens 24 eine Belüftungsöffnung 34 in der Form einer den äusseren Reibring 16 durchsetzenden Bohrung vorgesehen. Mit dieser Belüfungsöffnung 34 ist gewährleistet, dass beim Angiessen des Hutes 12 an den Bremsring 14 eine vollständige Füllung der Taschen 22 erfolgt.

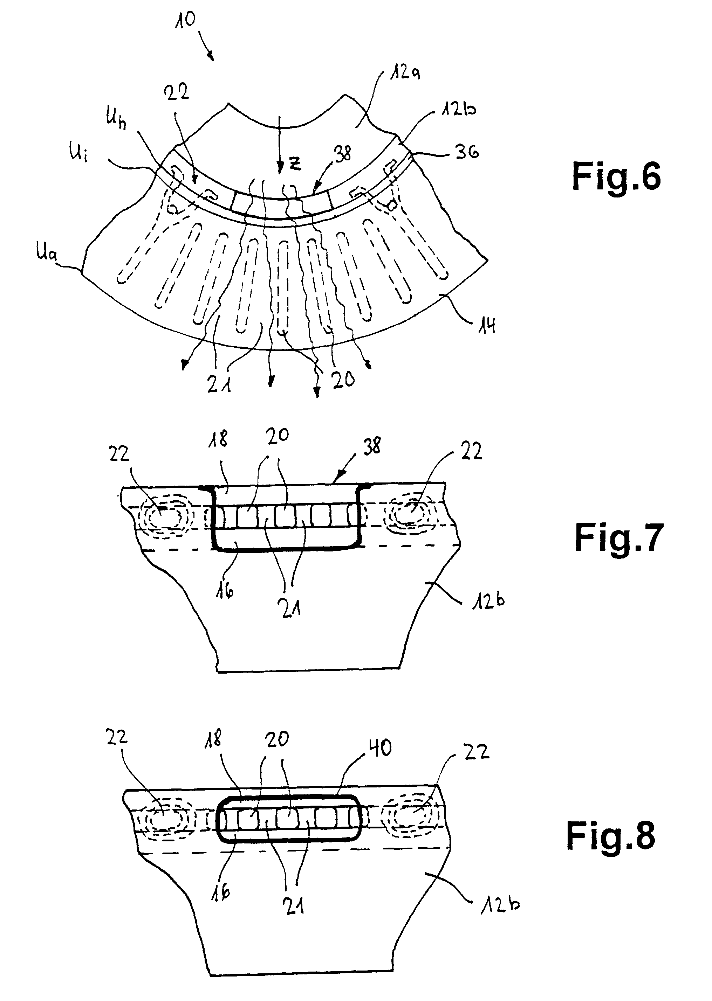

Bei der in Fig. 6 bis 8 dargestellten Variante einer Bremsscheibe 10 ist im zylindrischen Teil 12b des Hutes 12 zwischen jeweils zwei benachtbarten Taschen 22 eine Ausnehmung 38 vorgesehen. Diese Ausnehmung 38 kann sich gemäss Fig. 7 vom äusseren Rand des zylindrischen Teils 12b ausgehend über die gesamte Dicke der Bremsscheibe erstrecken. Bei der in Fig. 8 gezeigten Variante ist die Ausnehmung 38 als Langloch 40 ausgebildet.

Wie in Fig. 6 angedeutet, ergibt sich durch die Ausnehmung 38 hutseitig ein direkter Luftzutritt zu den durch die Stege 20 getrennten radialen Luftspalten 21 des Bremsringes 14.

Als Beispiel für einen Werkstoff zur Fertigung des Hutes 12 sei hier die Legierung G-AlSi 12 CuNiMg genannt. Der Bremsring kann beispielsweise in Grauguss ausgeführt sein.

Obschon sich die in der Zeichnung dargestellten Ausführungsbeispiele auf innenbelüftete Bremsscheiben mit äusserem und innerem Reibring beziehen, umfasst die vorliegende Erfindung selbstverständlich auch die Anformung von Taschen an massiven Bremsringen.

## Patentansprüche

1. Bremsscheibe mit einem Hut (12) aus einer Aluminium-Gusslegierung und einem Bremsring (14) aus Stahlguss oder Gusseisen, wobei der Hut (12) unter Ausbildung eines radialen Abstandes (b) zwischen Hut (12) und Bremsring (14) an am inneren Umfang (Uᵢ) des Bremsringes (14) radial einwärts ragende Verankerungsteile angegossen ist,
**dadurch gekennzeichnet, dass**
die Verankerungsteile als am Bremsring (14) angeformte Taschen (22) mit einem radial nach innen gerichteten, eine Taschenöffnung begrenzenden Taschenrand (26) ausgebildet sind, wobei der Taschenrand (26) vom Hut (12) umgossen ist und die Taschen (22) im wesentlichen mit der Aluminium-Gusslegierung gefüllt sind.

2. Bremsscheibe nach Anspruch 1, **dadurch gekennzeichnet, dass** die Anzahl der Taschen (22) zwischen etwa 3 und 14 liegt.

3. Bremsscheibe nach Anspruch 1 oder 2, **dadurch gekennzeichnet, dass** am Taschenrand (26) ein ringförmiger Steg (30) angeformt ist und nach aussen abragt.

4. Bremsscheibe nach einem der Ansprüche 1 bis 3, **dadurch gekennzeichnet, dass** die Taschen (22) im Bereich des Taschenrandes (26) eine ringförmige Hinterschneidung (32) aufweisen.

5. Bremsscheibe nach einem der Ansprüche 1 bis 4, **dadurch gekennzeichnet, dass** im Bereich des Taschenbodens (24) eine Belüftungsöffnung (34) vorgesehen ist.

6. Bremsscheibe nach einem der Ansprüche 1 bis 5, **dadurch gekennzeichnet, dass** die Hutwand (12b) zwischen benachbarten Taschen (22) Ausnehmungen (38) für den direkten Luftzutritt zum Bremsring (14) aufweist.

7. Bremsscheibe nach Anspruch 6, **dadurch gekennzeichnet, dass** die Ausnehmung (38) als Langloch (40) ausgebildet ist.

8. Bremsscheibe nach Anspruch 6 oder 7, **dadurch gekennzeichnet, dass** die Ausnehmungen (38) eingeformt sind.

9. Bremsscheibe nach einem der Ansprüche 6 bis 8, **dadurch gekennzeichnet, dass** der Bremsring (14) einen äusseren und einen inneren Reibring (16,18) mit radial verlaufenden Verbindungsstegen (20) aufweist und die Taschen (22) an Verbindungsstege angeformt sind, wobei die Ausnehmungen (38) zu einem direkten Luftdurchtritt zwischen den Reibringen (16,18) führen.

10. Bremsscheibe nach einem der Ansprüche 1 bis 9, **dadurch gekennzeichnet, dass** der Hut (12) aus einer warmfesten, gegebenenfalls faser- und/oder partikelverstärkten Aluminium-Gusslegierung und der Bremsring (14) aus Stahlguss oder Gusseisen, insbesondere aus einer Eisengusslegierung mit hohem Kohlenstoffgehalt besteht.

11. Bremsscheibe nach einem der Ansprüche 1 bis 10, **dadurch gekennzeichnet, dass** die Verbindung zwischen Hut (12) und Bremsring (14) durch Sandguss, Niederdruckguss, Kokillenguss, Pressguss, Druckguss, Squeezecasting oder Thixocasting hergestellt ist.

## Claims

1. Brake disc with a cover (12) made of a cast aluminium alloy and a brake ring (14) made of cast steel or cast iron, where the cover (12) is cast onto anchoring pieces protruding radially inwards from the inner circumference (Uᵢ) of the brake ring (14), leaving a radial spacing (b) between the cover (12) and the brake ring (14),
**characterised in that**
the anchoring pieces are constructed as pockets (22) formed on the brake ring with a pocket edge (26) bordering the radially inwardly facing pocket opening, where the pocket edge (26) is surrounded by the cover casting (12) and the pockets (22) are substantially filled with the cast aluminium alloy.

2. Brake disc according to claim 1, **characterised in that** the number of pockets ( 22 ) is between approximately 3 and 14.

3. Brake disc according to claim 1 or 2, **characterised in that** an annular web (30) is formed on the pocket edge (26) and protrudes externally.

4. Brake disc according to any of claims 1 to 3, **characterised in that** the pockets (22) have an annular undercut (32) in the vicinity of the pocket edge (26).

5. Brake disc according to any of claims 1 to 4, **characterised in that** a ventilation opening (34) is provided in the vicinity of the pocket floor (24).

6. Brake disc according to any of claims 1 to 5, **characterised in that** the cover wall (12b) has recesses between adjacent pockets (22) for the direct air passage to the brake ring (14).

7. Brake disk according to claim 6, **characterised in that** the recess (38) is a slot (40).

8. Brake disk according to claim 6 or 7, **characterised in that** the recesses (38) are formed during casting.

9. Brake disk according to any of claims 6 to 8, **characterised in that** the brake ring (14) has an external and an internal friction ring (16,18) with radially positioned connecting webs (20) and the pockets (22) are integrally formed with the connecting webs, whereby the recesses (38) lead to a direct air passage between the friction rings (16,18).

10. Brake disc according to any of claims 1 to 9, **characterised in that** the cover (12) is made of a heat-resistant, if necessary fibre and/or particle-reinforced cast aluminium alloy and the brake ring (14) is made of cast steel or cast iron, in particular from a cast iron alloy with a high carbon content.

11. Brake disc according to any of claims 1 to 10, **characterised in that** the connection between cover (12) and brake ring (14) is produced by sand casting, low pressure casting, chill casting, pressure casting, die casting, squeeze casting or thixo casting.

## Revendications

1. Disque de frein comportant un chapeau (12) en un alliage de fonte d'aluminium et une bague de freinage (14) en acier moulé ou en fonte de fer, dans lequel le chapeau (12) est joint par fusion, en formant une distance radiale (b) entre le chapeau (12) et la bague de freinage (14), sur des éléments d'ancrage qui font saillie radialement vers l'intérieur sur la périphérie intérieure (Ui) de la bague de freinage (14),
**caractérisé en ce que**
les éléments d'ancrage sont réalisés sous la forme de poches (22) formées sur la bague de freinage (14) et comportant un bord de poche (26) qui limite une ouverture de poche, le bord de poche (26) étant entouré par fusion par le chapeau (12) et les poches (22) étant essentiellement remplies avec l'alliage de fonte d'aluminium.

2. Disque de frein selon la revendication 1, **caractérisé en ce que** le nombre des poches (22) est compris entre environ 3 et 14.

3. Disque de frein selon la revendication 1 ou 2, **caractérisé en ce qu'**une barrette annulaire (30) est formée sur le bord de poche (26) et fait saillie vers l'extérieur.

4. Disque de frein selon l'une quelconque des revendications 1 à 3, **caractérisé en ce que** les poches (22) comportent, dans la zone du bord de poche (26), une contre-dépouille (32) en forme d'anneau.

5. Disque de frein selon l'une quelconque des revendications 1 à 4, **caractérisé en ce que** l'on prévoit, dans la zone du fond (24) de la poche, une ouverture de ventilation (34).

6. Disque de frein selon l'une quelconque des revendications 1 à 5, **caractérisé en ce que** la paroi (12b) du chapeau comporte, entre des poches voisines (22), des évidements (38) pour l'accès direct de l'air vers la bague de freinage (14).

7. Disque de frein selon la revendication 6, **caractérisé en ce que** l'évidement (38) est réalisé sous la forme d'un trou oblong (40).

8. Disque de frein selon la revendication 6 ou 7, **caractérisé en ce que** les évidements (28) sont moulés.

9. Disque de frein selon l'une quelconque des revendications 6 à 8, **caractérisé en ce que** la bague de freinage (14) comporte une face annulaire de freinage interne (16) et une face annulaire de freinage externe (18) qui comportent des barrettes de liaison (20) qui s'étendent radialement et **en ce que** les poches (22) sont formées sur des barrettes de liaison, les évidements (38) entraînant un accès direct de l'air entre les faces de freinage (16, 18).

10. Disque de frein selon l'une quelconque des revendications 1 à 9, **caractérisé en ce que** le chapeau (12) est constitué en un alliage de fonte d'aluminium qui est stable à la température et, le cas échéant, renforcé par des fibres et/ou des particules et **en ce que** la bague de freinage (14) est constituée en fonte d'acier ou en fonte de fer, en particulier en un alliage de fonte de fer à forte teneur en carbone.

11. Disque de frein selon l'une quelconque des revendications 1 à 10, **caractérisé en ce que** la liaison entre le chapeau (12) et la bague de freinage (14) est réalisée par coulée en sable, coulée à basse pression, coulée en lingotière, coulée sous pression, moulage sous pression, squeezecasting ou thixocasting.
